(19) Europäisches Patentamt / European Patent Office / Office européen des brevets

(11) EP 2 610 778 A1

(12) EUROPEAN PATENT APPLICATION

(43) Date of publication:
03.07.2013 Bulletin 2013/27

(51) Int Cl.:
G06K 9/00 (2006.01)   G06T 5/00 (2006.01)

(21) Application number: 11195832.8

(22) Date of filing: 27.12.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Harman International (China) Holdings
Co., Ltd.
Huangpu District
Shanghai
200003 (CN)

(72) Inventors:
• Zhang, Yankun
  Shanghai (CN)
• Hong, Chuyang
  Shanghai (CN)
• Weyrich, Norman
  Shanghai-Pudong 201206 (CN)

(74) Representative: Meier, Florian
Kraus & Weisert
Patent- und Rechtsanwälte
Thomas-Wimmer-Ring 15
80539 München (DE)

(54) **Method of detecting an obstacle and driver assist system**

(57) To detect an obstacle (2) in a single image (21) captured using a single image sensor of a driver assist system, at least one image feature (24-26) is established in the single image (21) which extends along a line (27-29) passing through a projection point (23) of the image sensor. At least one line extending along a direction normal to a road surface in the world coordinate system is thereby identified based on the single image (21), which is used as a signature for an obstacle.

Fig. 2

**Description**

Technical Field

The invention relates to obstacle recognition for driver assist functions. The invention relates in particular to a method of detecting an obstacle using an optical sensor, and to a driver assist system configured to detect an obstacle.

Background

The popularity of driver assist systems continues to increase. Driver assist systems may assist a driver in certain tasks, thereby enhancing comfort and safety. Driver assist system may be operative to provide warning signals to a driver, so as to alert the driver of a potentially hazardous condition, or to perform active control functions. Collision prediction or parking assist systems are examples for functions that may be performed by a driver assist system. Some functions of a driver assist system may use obstacle detection, and an obstacle detection function may be integrated into a driver assist system. To detect obstacles, the system monitors the road and may output a warning signal to the driver when the vehicle is approaching an object. Such systems may reduce the risk of collisions, thereby increasing road safety.

Various sensors may be used to perform obstacle detection. Radar sensor, ultrasonic sensors or vision system having one or plural camera may be used to monitor the proximity of objects to the car. Cameras may have optical components, such as fisheye lenses, and an optoelectronic element, such as a CMOS, CCD or other chip. Obstacle detection systems which use cameras have great potential to provide drivers with reliable assistance in identifying obstacles near the car when car is in motion.

Conventional approaches for performing obstacle detection rely on an evaluation of at least two images. The two images may be captured by one image sensor in a time-sequential manner, or may be captured in parallel by two image sensors of a stereo camera. Massimo Bertozzi, Alberto Broggi, "GOLD: A Parallel Real-Time Stereo Vision System for Generic Obstacle and Lane Detection". IEEE TRANSACTIONS ON IMAGE PROCESSING, VOL. 7, NO. 1, JANUARY 1998, pp. 62-81 and Massimo Bertozzi, Alberto Broggi, Alessandra Fascioli, "Stereo inverse perspective mapping: theory and applications", Image and vision computing 16 (1998), pp. 585-590 describe an approach based on stereo cameras. A difference image is computed, and a polar histogram may be determined for the difference image. When images are captured in a sequential manner, the motion parameters of the vehicle must be known. Chanhui Yang, Hitoshi Hongo, Shinichi Tanimoto, "A new approach for In-Vehicle Camera Obstacle Detection By Ground Movement Compensation", IEEE Intelligent Transportation Systems, 2008, pp. 151-156 describes an obstacle detection scheme which uses feature point tracking and matching by combining the information contained in several video frames which are captured in a time-sequential manner.

Conventional approaches for obstacle detection may be based on identifying individual pixels which belong to an edge of the obstacle, or may discard two-dimensional information by computing polar histograms. Such approaches may be prone to suffering from noise conditions. Noise causing high signal intensities or high intensity gradients at individual pixels may give rise to false positives in such approaches.

If at least two images must be captured with separate image sensors, which are then combined in a computational way for obstacle detection, the required additional componentry may add to the overall costs of the obstacle detection system. The combination of plural images, irrespective of whether they are captured in parallel using the two image sensors of a stereo camera or in a time-sequential manner, adds to the computational complexity. If the motion of the vehicle must be tracked between image exposures, this further increases the complexity.

Summary

Accordingly, there is a need for methods and systems which allow obstacles to be detected in a reliable and robust way, and at moderate computational costs. In particular, there is a need for such methods and systems which allow an obstacle to be detected without requiring plural images to be combined computationally to detect the obstacle.

This need is addressed by a method and driver assist system as recited in the independent claims. The dependent claims define embodiments.

According to an embodiment, a method of detecting an obstacle in a single image captured using a single image sensor of a driver assist system is provided. The single image captured using the single image sensor is retrieved. At least one line extending along a direction normal to a road surface is identified based on the single image. The obstacle is detected based on the identified at least one line. Identifying the at least one line comprises establishing at least one image feature in the single image which extends along a line passing through a projection point of the image sensor.

In the method, lines extending perpendicular to the road surface are used as an indicator for an obstacle, leading to a robust detection. Lines extending normal to the road surface of the road on which the vehicle is located may be detected as features extending along lines of the image that pass through the projection point of the image sensor. This allows obstacles to be identified in a single image, without requiring plural images to be combined to detect an obstacle.

The projection point of the image sensor may be determined based on parameters of the single image sensor. The projection point may be determined based on both extrinsic parameters, such as pitch angle, yaw angle, and height above ground, and intrinsic parameters of the image sensor.

Establishing the at least one image feature in the single image may comprise generating a two-dimensional angle-transformed image based on the single image and the determined projection point. An edge detector may be applied to the angle-transformed image to identify at least one feature which extends orthogonal to one of the edges of the angle-transformed image. The angle-transformed image may be generated such that it has an angle coordinate axis, which represents angles of lines passing through the projection point in the single image. The edge detector may be applied to the angle-transformed image to identify the at least one feature which extends along a direction transverse to the angle coordinate axis in the angle-transformed image. By performing the angle-transform, features that extend along lines in the image that pass through the projection point are transformed into features that extend in a direction transverse to angle coordinate axis. The features then extend along columns or rows of the angle-transformed image. This reduces computational complexity when identifying these features.

Applying the edge detector may comprise performing a length threshold comparison for a length over which the at least one feature extends along the direction normal to the angle coordinate axis. This allows small features to be discarded, thereby further decreasing false positives. Computational costs in the subsequent processing may be reduced when features having a short length, as determined by the threshold comparison, are discarded.

Applying the edge detector may comprise determining a spatially resolved gradient response in the angle-transformed image. The edge-detector may detect Haar-like features. Determining the gradient response may comprise determining a difference between two sub-rectangles of a Haar-like feature. Each pixel of the angle-transformed image may have a pixel value, and the gradient response may be determined based on the pixel values. Haar-like features of different scales and/or aspect ratios may be used. The gradient response at a pixel which will be used for further processing may be defined to be the maximum of the gradient responses obtained for the various scales and/or aspect ratios. The gradient response may be determined at low computational costs. To this end, a summed area table may be computed. The gradient response may be determined based on the summed area table.

Applying the edge detector may comprise determining whether a gradient response at a pixel in the angle-transformed image is greater than both a gradient response at a first adjacent pixel and a gradient response at a second adjacent pixel, wherein the first and second pixels are adjacent to the pixel along the angle coordinate axis. Thereby, a local suppression may be performed for pixels at which the gradient response is not a local maximum, as a function of the angle coordinate in the angle-transformed image. Spurious features may thereby be suppressed, increasing robustness of the obstacle detection. Computational costs in the subsequent processing may be reduced when local maxima in gradient response are identified and non-maximum gradient response is suppressed.

Applying the edge detector may comprise selectively setting the gradient response at the pixel to a default value based on whether the gradient response at the pixel in the angle-transformed image is greater than both the gradient response at the first adjacent pixel and the gradient response at the second adjacent pixel. Thereby, spurious features may be suppressed, increasing robustness of the obstacle detection. Applying the edge detector may comprise tracing the gradient response, the tracing being performed with directional selectivity. The tracing may be performed along a direction transverse to the angle coordinate axis in the angle-transformed image. The tracing may be performed along this direction to identify a feature in the angle-transformed image, corresponding to a high gradient response that extends along the direction orthogonal to the angle coordinate axis in the angle-transformed image.

The tracing may comprise comparing the gradient response to a first threshold to identify a pixel in the angle-transformed image, and comparing the gradient response at another pixel which is adjacent to the pixel in the angle-transformed image to a second threshold, the second threshold being different from the first threshold. A starting point of a linear feature may thereby be identified based on the first threshold comparison. The tracing in adjacent pixels is performed using a second threshold, thereby allowing tracing of a linear feature even when the gradient response falls to below the first threshold.

The gradient response at plural other pixels may respectively be compared to the second threshold, the plural other pixels being offset from the identified pixel in a direction perpendicular to the angle coordinate axis. The pixel may be identified based on whether the gradient response at the pixel exceeds the first threshold, and the second threshold may be less than the first threshold. This simplifies tracing, taking into account that the relevant features extend transverse to the angle coordinate axis in the angle-transformed image. The length of a feature identified in the angle-transformed image may be detected, and features having too small length may be discarded. Thereby, robustness may be increased and computational costs may be decreased. The speed at which object recognition is performed may be enhanced.

If the image sensor has optical components which cause distortions, these distortions may be corrected in a raw image to generate the corrected, single image which is then processed to identify the at least one feature which extends along a line passing through the projection point. This allows the obstacle detection to be reliably performed even when optical components such as fisheye-lenses are used.

Information on the identified at least one line may be provided to a driver assist system. The driver assist system may correlate a position of the identified at least one line to a current vehicle position and/or driving direction to selectively output a signal if the vehicle is approaching the obstacle. The driver assist system may control an optical output interface to provide information on the obstacle, based on the position of the identified at least one line.

According to another embodiment, a driver assist system is provided. The driver assist system comprises at least one image sensor and a processing device coupled to the at least one image sensor. The processing device is configured to identify at least one line extending along a direction normal to a road surface based on a single image captured using a single image sensor of the at least one image sensor. The processing device is configured to detect an obstacle based on the identified at least one line. The processing device is configured to establish at least one image feature in the single image which extends along a line passing through a projection point of the image sensor, in order to identify the at least one line.

The driver assist system uses lines extending perpendicular to the road surface as an indicator for an obstacle, leading to a robust detection. Lines extending normal to the road surface of the road on which the vehicle is located may be detected as features extending along lines of the image that pass through the projection point of the image sensor. This allows obstacles to be identified in a single image, without requiring plural images to be combined to detect an obstacle.

The driver assist system may comprise an output interface coupled to the processing device. The processing device may be configured to control the output interface to selectively output a warning signal based on the detected obstacle during a parking process. This allows the obstacle detection to be used in a parking assist function.

The driver assist system may be configured to perform the method of any one aspect or embodiment described herein. The processing device of the driver assist system may perform the processing of the single image, to thereby identify a line normal to the road surface without requiring plural images to be processed in combination for obstacle detection.

The driver assist system may have additional functions, such as navigation functions

It is to be understood that the features mentioned above and those to be explained below can be used not only in the respective combinations indicated, but also in other combinations or in isolation.

Brief description of the drawings

The foregoing and other features of embodiments will become more apparent from the following detailed description of embodiments when read in conjunction with the accompanying drawings. In the drawings, like reference numerals refer to like elements.

Fig. 1 is a schematic block diagram of a vehicle having a driver assist system of an embodiment.

Fig. 2 shows raw image data having non-linear distortions, a single image generated by correcting non-linear distortions in the raw image data, and an angle-transformed image generated from the single image.

Fig. 3 shows raw image data having non-linear distortions.

Fig. 4 shows a single image generated by correcting non-linear distortions in the raw image data of Fig. 3.

Fig. 5 shows an angle-transformed image generated from the single image of Fig. 5.

Fig. 6 is a flow chart of a method of an embodiment.

Fig. 7 is a flow chart of a method of an embodiment.

Fig. 8 is a flow chart of a procedure of processing the angle-transformed image in a method of an embodiment.

Fig. 9 illustrates a detector for Haar-like features in the method of an embodiment.

Fig. 10 illustrates the use of a summed area table for computing gradient responses in the method of an embodiment.

Fig. 11 illustrates a suppression of non-maximum gradient responses in the method of an embodiment.

Fig. 12 illustrates tracing of a feature in the angle-transformed image in the method of an embodiment.

Fig. 13 illustrates tracing of a feature in the angle-transformed image in the method of an embodiment.

Detailed description

Throughout the description, identical or similar reference numerals refer to identical or similar components. While some embodiments will be described in specific contexts, such as a outputting of warning signals in response to detected obstacles, embodiments are not limited to these specific contexts.

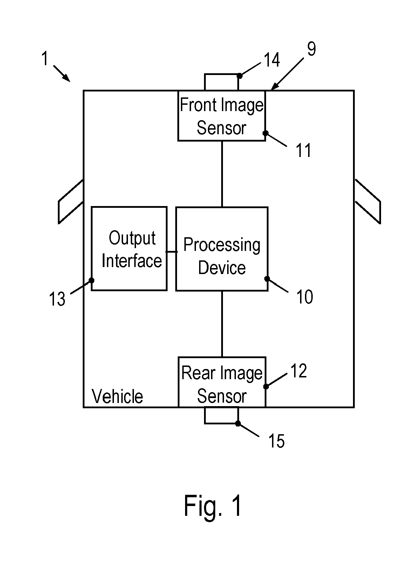

Fig. 1 schematically illustrates a vehicle 1 equipped with a driver assist system 9 according to an embodiment. The driver assist system 9 comprises a processing device 10 controlling the operation of the driver assist system 9, e.g. according to control instructions stored in a memory. The processing device 10 may comprise a central processing unit, for example in form of one or more processors, digital signal processing devices or application-specific integrated circuits. The driver assist system 9 further includes one or several image sensors. A front image sensor 11 and a rear image sensor 12 may be provided. In other implementations, only one image sensor or more than two image sensors may be provided. The front image sensor 11 and the rear image sensor 12 may respectively be a camera which includes an optoelectronic element, such as a CMOS sensor, a CCD sensor, or another optoelectronic sensor which converts an optical image into a two-dimensional array of image data. The front image sensor 11 may have an imaging optics 14. The imaging optics 14 may include a lens which generates a non-linear distortion, e.g. a fisheye-lens. The rear image sensor 12 may have an imaging optics 15. The imaging optics 15 may include a lens which generates a non-linear distortion, e.g. a fisheye-lens.

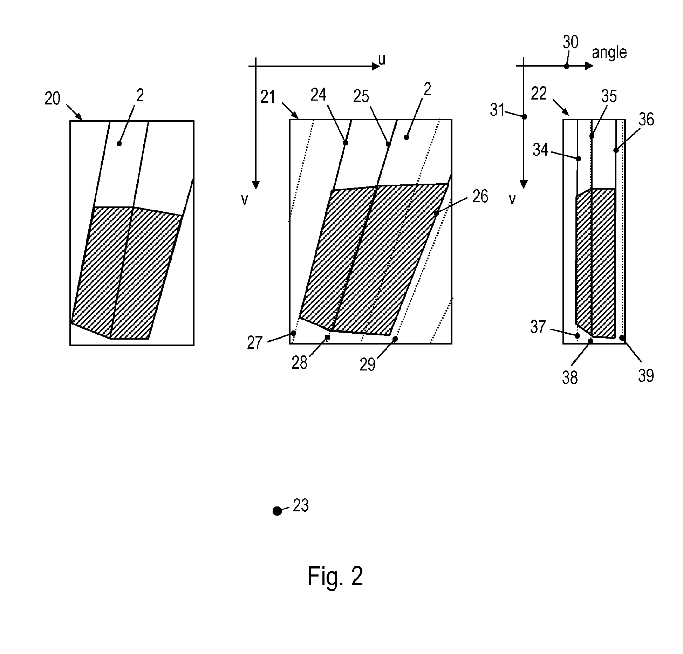

The driver assist system 9 also includes an output interface 13 for outputting information to a user. The output interface 13 may include an optical output device, an audio output device, or a combination thereof. The processing device 10 is configured to identify an obstacle by evaluating a single image sensor. As will be described in more detail with reference to Figs. 2 to 13, the processing device 10 uses lines that are oriented normal to a road surface on which the vehicle is located as indicators for obstacles. The processing device 10 detects such lines by analyzing the single image to identify image features in the image which extend along lines that pass through a projection point of the respective image sensor. The processing device 10 may perform an angle-transform to generate an angle-transformed image, to facilitate recognition of such image features. The angle-transformed image generated by the processing device 10 is a two-dimensional angle-transformed image, with one of the two orthogonal coordinate axes quantifying angles of lines passing through the projection point in the image. Image features which extend along a line passing through the projection point in the image therefore are transformed into features which extend along a line that is oriented transverse to an angle coordinate axis in the angle-transformed image. Such features may be efficiently detected in the angle-transformed image. The processing device 10 may selectively identify features in the angle-transformed image which have a length that exceeds, or is at least equal to, a certain length threshold. This remains possible because two-dimensional information is maintained in the angle-transformed image. The processing device 10 may thereby verify whether features in the angle-transformed image correspond to lines which, in the world coordinate system, have a finite extension along a direction normal to the road surface. The likelihood of false positives, which may occur by noise which causes high gradients in pixel values at individual, isolated pixels, is thereby reduced.

The processing device 10 may identify obstacles in a single image, without it being required that plural images be combined in a computational process to identify the obstacle. For illustration, the processing device 10 may identify an obstacle located in front of the vehicle by processing a single image captured using the front image sensor 11, even when the front image sensor 11 is not a stereo camera and includes only one optoelectronic chip. Alternatively or additionally, the processing device 10 may identify an obstacle located at the rear of the vehicle by processing a single image captured using the rear image sensor 12, even when the rear image sensor 12 is not a stereo camera and includes only one optoelectronic chip. The processing device 10 may process in parallel a first image captured using the front image sensor 11 and a second image captured by the rear image sensor 12. The processing device 10 may identify an obstacle located in the field of view of the front image sensor based on the first image and independently of the second image. The processing device 10 may identify an obstacle located in the field of view of the rear image sensor based on the second image and independently of the first image.

The driver assist system 9 may include additional components. For illustration, the driver assist system 9 may include a position sensor and/or a vehicle interface. The processing device 10 may be configured to retrieve information on the motion state of the vehicle from the position sensor and/or the vehicle interface. The information on the motion state may include information on the direction and/or speed of the motion. The processing device 10 may evaluate the information on the motion state in combination with the obstacles detected by evaluating the image. The processing device 10 may selectively provide information on obstacles over the output interface 13, based on whether the vehicle is approaching a detected obstacle. The position sensor may comprise a GPS (Global Positioning System) sensor, a Galileo sensor, or a position sensor based on mobile telecommunication networks. The vehicle interface may allow the processing device 10 to obtain information from other vehicle systems or vehicle status information via the vehicle interface. The vehicle interface may for example comprise CAN (controller area network) or MOST (Media Oriented devices Transport) interfaces.

With reference to Figs. 2 to 13, the detection of an obstacle by processing a single image will be described in more detail. The processing device 10 of the driver assist system may automatically perform the various processing steps described with reference to Figs. 2 to 13.

Fig. 2 schematically shows raw image data 20 captured by a single image sensor. The raw image data 20 may be captured by the front image sensor 11 or by the rear image sensor 12. A wall-type feature rising perpendicularly from a road surface is shown as an example for an obstacle 2. The raw image data 20 may have non-linear distortions. This may be the case when the optics of the single image sensor causes non-linear distortions. When a fisheye lens or another lens is used to increase the field of view, non-linear distortions in the raw image data 20 may result. The processing device may correct these distortions to generate the single image 21. The correction may be performed based on intrinsic parameters of the single image sensor. By performing such a calibration, the single image 21 is obtained. No calibration to correct non-linear distortions is required if the optics of the image sensor does not cause image distortions, or if the distortions are negligible.

The processing device 10 processes the single image 21 to identify lines which, in the world coordinate system, extend normal to the road surface. Such lines correspond to image features which extend along lines 27-29 in the single image 21 passing through a projection point 23 of the single image sensor in the image reference frame. For illustration, the obstacle 2 has edges 24, 25 and 26 which extend normal to the road surface. These edges 24, 25 and 26 respectively extend along lines in the image 21 passing through the projection point 23. The edge 24 extends along line 27, for example. The edge 25 extends along line 28, for example.

The processing device 10 may be configured to verify that an image feature detected in the image 21 has a direction matching to a line passing through the projection point 23. The processing device 10 may further perform a threshold comparison for a length of the image feature along the line to verify that the feature has a finite extension, as opposed to being limited to a single pixel, for example. While such processing may be performed directly on the image 21, the processing device 10 may compute an angle-transformed image 22 to facilitate processing.

The angle-transformed image 22 may be automatically generated by the processing device 10, based on the coordinates of the projection point 23. Pixel values of pixels in the image 21 located along a line 27 which passes through the projection point 23 and is arranged at an angle relative to one of the coordinate axes of the image 21 are transformed into pixel values of the angle-transformed image 22 which extend along a line 37 orthogonal to an angle coordinate axis 30. The line 37 may be a column of the angle-transformed image, for example. The position of the line 37, i.e. of the column into which the pixel values are entered, in the angle-transformed image is determined by the angle at which the line 27 is arranged in the image 21. Similarly, pixel values of image 21 located along another line 28 passing through the projection point 23 and arranged at another angle relative to one of the coordinate axes of the image 21 are transformed into pixel values of the angle-transformed image 22 in another column extending along another line 38 in the angle-transformed image. The position of the other line 38, i.e. of the other column into which the pixel values are entered, in the angle-transformed image is determined by the other angle at which the line 28 is arranged in the image 21.

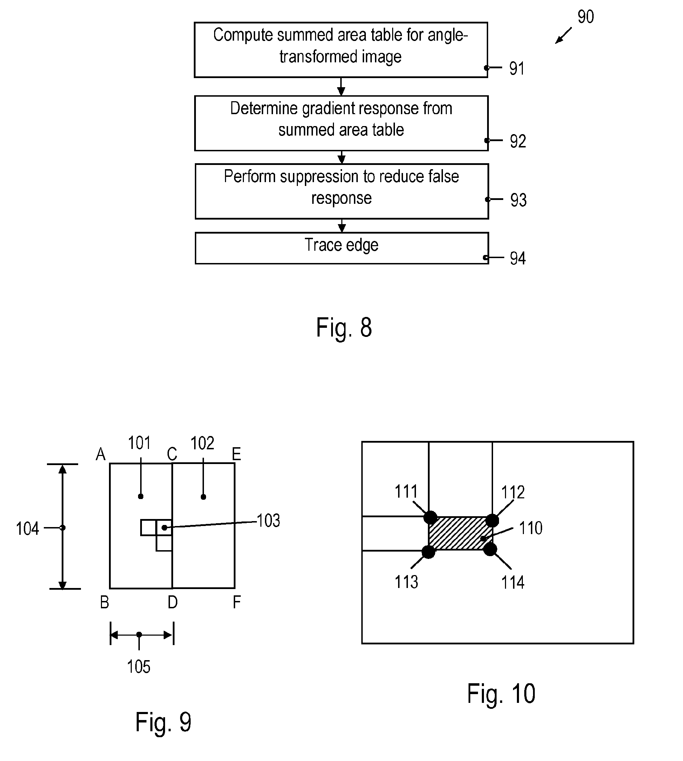

Lines which, in the world coordinate system, extend in a direction normal to a road surface extend along a direction 31 orthogonal to the angle coordinate axis 30 in the angle-transformed image 22. Such lines extending orthogonal to one coordinate axis 30 of the angle-transformed image may be detected efficiently and reliably. Implementations of an edge detector which may be applied to the angle-transformed image 22 will be described in more detail with reference to Figs. 8 to 13. The detection of features which, in the angle-transformed image, extend transverse to the angle coordinate axis 30 may in particular be based on a gradient response, in combination with edge tracing techniques. Features which are identified as belonging to a line of an obstacle which raises orthogonal from the road surface extend orthogonal to the angle coordinate axis 30, which allows tracing to be performed efficiently with directional selectivity.

The determination whether an image feature in the image 21 is located along a line passing through the projection point 23 is performed based on the coordinates of the projection point in the image coordinate system. The coordinates of the projection point of the image sensor may be computed based on intrinsic and extrinsic parameters of the respective image sensor. The extrinsic and intrinsic parameters may be determined in a calibration of a vehicle vision system, for example, and may be stored for subsequent use. Similarly, the projection point of the image sensor may be determined and stored for repeated use in obstacle detection.

Mapping from a world coordinate system to the image may be described by a linear transform, after non-linear distortions which may be caused by optics have been compensated. The corresponding matrix defining the mapping may depend on extrinsic and intrinsic parameters of the camera. Extrinsic parameters may include the orientation of the camera and the height above ground. A widely used camera position is one where the camera is disposed at a pitch angle $\alpha$ and a yaw angle $\beta$, but where there is no roll angle. The height above ground may be denoted by h. Intrinsic parameters include the focal lengths $f_u$ and $f_v$, and the coordinates of the optical center given by $c_u$ and $c_v$, where u and v denote the coordinate axes in the image reference frame before the angle-transform is performed. There may be additional intrinsic parameters, such as parameters defining a radial distortion, or parameters defining a tangential distortion. When distortions have been corrected or when distortions are negligible, the ground to image transform matrix may be written as:

$$_g^i T = \begin{pmatrix} f_u c_2 + c_u c_1 s_2 & -s_2 f_u + c_u c_1 c_2 & -c_u s_1 \\ s_2(c_v c_1 - f_v s_1) & c_2(c_v c_1 - f_v s_1) & -f_v c_1 - c_v s_1 \\ c_1 s_2 & c_1 c_2 & -s_1 \end{pmatrix} \tag{1}$$

Here, the following notation is used:

$$c_1 = \cos\alpha, \tag{2a}$$

$$s_1 = \sin\alpha, \tag{2b}$$

$$c_2 = \cos\beta, \text{ and} \tag{2c}$$

$$s_2 = \sin\beta. \tag{2d}$$

The projection point of the camera, having coordinates Cu and Cv, is obtained according to:

$$\begin{pmatrix} C_u' \\ C_v' \\ C_z \end{pmatrix} = {}_g^i T \begin{pmatrix} 0 \\ 0 \\ -h \end{pmatrix}, \text{ and} \tag{3}$$

subsequent normalization to obtain:

$$\begin{pmatrix} Cu \\ Cv \end{pmatrix} = \begin{pmatrix} C_u'/C_z \\ C_v'/C_z \end{pmatrix}. \tag{3}$$

The coordinates of the projection point Cu and Cv, determined in accordance with Equations (1) to (4) above, may be retrieved and may be used when computing the angle-transformed image 22 from the image 21.

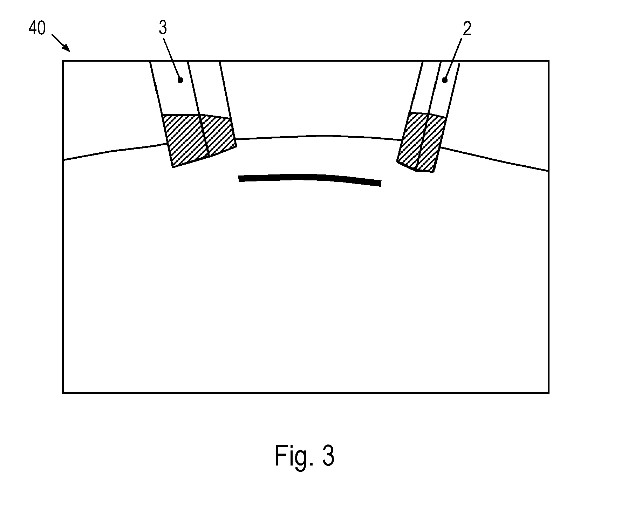

The processing of an image performed by the processing device 10 is further illustrated with reference to Figs. 3 to 5.

Fig. 3 shows raw image data 40 captured by an image sensor. The raw image data have non-linear distortions, such as fisheye-type distortions. These distortions caused by the optics are compensated computationally, using the known intrinsic parameters of the image sensor.

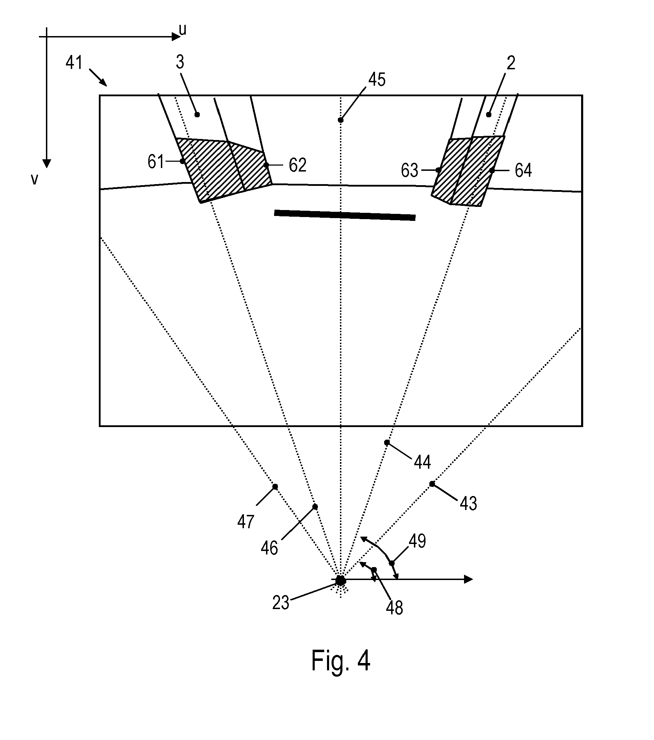

Fig. 4 shows the single image 41 obtained by compensating the non-linear distortions caused by the optics. A first obstacle 2 and a second obstacle 3 are shown in the single image 41. The edges of the first obstacle 2 and of the second obstacle 3 extend normal to the road surface in the world coordinate system. In the image 41, these vertical edges of the first and second obstacles 2 and 3 are image features 61-64 which extend along lines passing through the projection point 23. Exemplary lines 43-47 passing through the projection point 23 are shown in Fig. 4. Line 43 is arranged at an angle 48 relative to a first coordinate axis, e.g. the u coordinate axis, of the image reference frame. Line 44 is arranged at an angle 49 relative to the fist coordinate axis of the image reference frame. With the coordinates of the projection point 23 in the image reference frame being known, the single image 41 can be converted into an angle-transformed image 42.

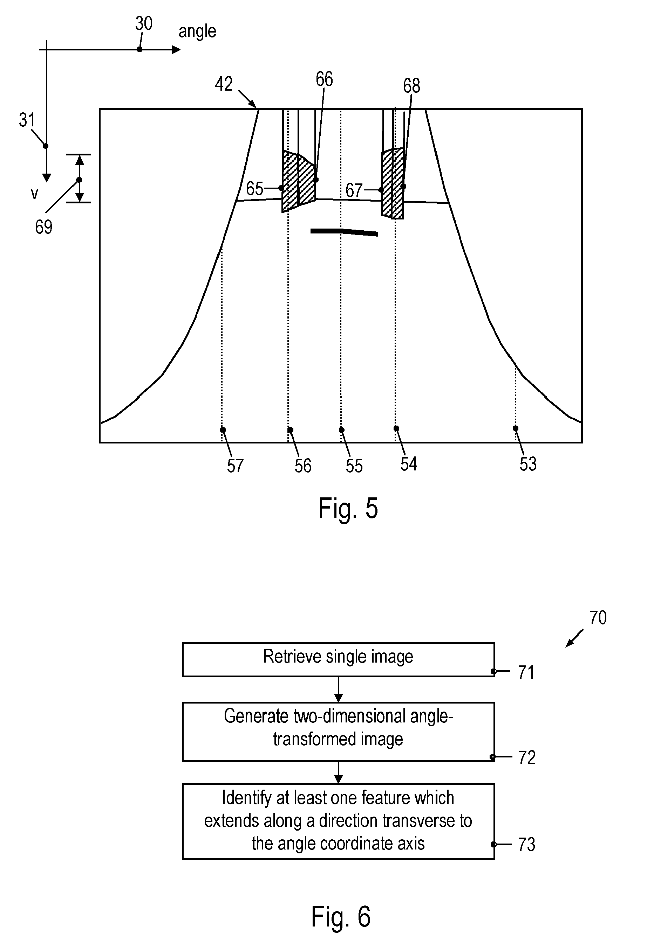

Fig. 5 shows the angle-transformed image 42 obtained by performing an angle-transform on image 41. One coordinate axis 31 of the angle-transformed image 42 corresponds to angles 48, 49 of lines in the single image 41. Pixel values of pixels located along line 43 in the single image 41 are used to generate a column of the angle-transformed image 42, the column extending along line 53 orthogonal to the angle coordinate axis 30. The position of the line 53 along the angle coordinate axis 30 is determined by the angle 48. Pixel values of pixels located along line 44 in the single image 41 are used to generate another column of the angle-transformed image 42, the other column extending along line 54 orthogonal to the angle coordinate axis 30. The position of the line 54 along the angle coordinate axis 30 is determined by the angle 49. Similarly, pixel values of pixels located along line 45 in the single image 41 are used to generate yet another column of the angle-transformed image 42, the column extending along line 55 orthogonal to the angle coordinate axis 30. Similarly, pixel values of pixels located along line 46 in the single image 41 are used to generate yet another column of the angle-transformed image 42, the column extending along line 56 orthogonal to the angle coordinate axis 30. Similarly, pixel values of pixels located along line 47 in the single image 41 are used to generate yet another column of the angle-transformed image 42, the column extending along line 57 orthogonal to the angle coordinate axis 30. The angle transform is performed based on the coordinates of the projection point 23, to generate the two-dimensional angle-transformed image 42.

The angle-transform causes image features that extend along lines passing through the projection point 23 in the single image 23 to be transformed into features extending orthogonal to the angle coordinate axis 30 in the angle-transformed image 43. An image feature 61 which represents a vertical edge of the obstacle 3 in the world coordinate system is thereby transformed into a feature 65 in the angle-transformed image 42 which extends orthogonal to the angle coordinate axis 30. Another image feature 62 which represents another vertical edge of the obstacle 3 in the world coordinate system is transformed into a feature 66 in the angle-transformed image 42 which also extends orthogonal to the angle coordinate axis 30. An image feature 63 which represents a vertical edge of the obstacle 2 in the world coordinate system is transformed into a feature 67 in the angle-transformed image 42 which extends orthogonal to the angle coordinate axis 30. Another image feature 64 which represents another vertical edge of the obstacle 2 in the world coordinate system is transformed into a feature 68 in the angle-transformed image 42 which also extends orthogonal to the angle coordinate axis 30.

The features 65-68 in the angle-transformed image 42 may be detected using a suitable edge detector. As the angle-transformed image 42 is a two-dimensional image, a threshold comparison may be performed for the lengths of the features 65-68. Only features having a length extending across a pre-defined number of rows of the angle-transformed image 43 may be identified as representing lines of the object having a finite extension in the direction normal to the road surface. A threshold 69 is schematically indicated in Fig. 5.

Fig. 6 is a flow chart of a method 70 according to an embodiment. The method may be performed by the processing device 10. The method may be performed to implement the processing described with reference to Figs. 2 to 5 above.

At 71, a single image is retrieved. The single image may be retrieved directly from a single image sensor of a driver assist system. If the optics of the single image sensor generates non-linear distortions, such as fisheye-distortions, these distortions may be corrected to retrieve the single image.

At 72, a two-dimensional angle-transformed image is generated. The angle-transformed image is generated based on the single image retrieved at 71 and coordinates of a projection point of the image sensor in the reference system of the single image. The angle-transformed image may be generated such that, for plural lines passing through the projection point in the image, pixels which are located along the respective line are respectively transformed into a pixel column in the angle-transformed image.

At 73, at least one feature is identified in the angle-transformed image which extends in a direction transverse to the angle coordinate axis. An edge detector may be used to identify the feature. The edge detector may be implemented as described with reference to Figs. 8 to 13 below. The identification of the at least one feature may include performing a threshold comparison for a length of the at least one feature, to ensure that the feature has a certain length corresponding to plural pixels of the angle-transformed image.

The features extending orthogonal to the angle coordinate axis in the angle-transformed image correspond to image features located along lines passing through the projection point in the image. According to inverse perspective mapping theory, such image features correspond to vertical lines in the world coordinate system.

The processing device may determine the position of an obstacle relative to the car from the coordinates of the feature(s) which are identified in the angle-transformed image. The angle-transform may be inverted for this purpose. The extrinsic and intrinsic parameters of the camera may be utilized to compute the position of the obstacle relative to the vehicle. The position of the obstacle may be used for driver assist functions, such as parking assistance.

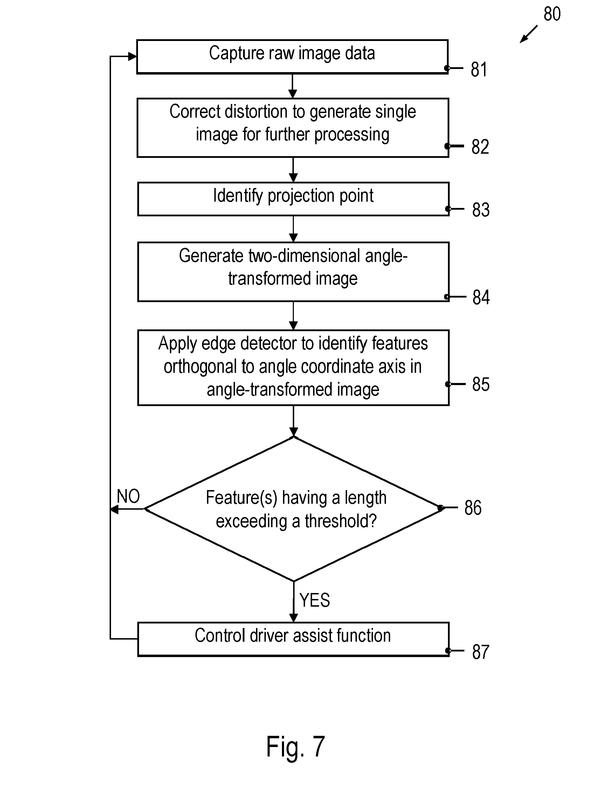

Methods of embodiments may include additional steps, such as correction of non-linear distortions or similar. This will be illustrated with reference to Fig. 7.

Fig. 7 is a flow chart of a method 80 according to an embodiment. The method may be performed by the processing device 10. The method may be performed to implement the processing described with reference to Figs. 2 to 5 above.

At 81, a single image sensor captures raw image data. The raw image data may have non-linear distortions caused by optics of the single image sensor. The single image sensor may include one CMOS, CCD, or other optoelectronic chip to capture the raw image data. The single image sensor is not configured to capture plural images in parallel and, in particular, is not a stereo camera.

At 82, distortions caused by the optics of the image sensor are corrected. Non-linear distortions may be corrected based on intrinsic parameters of the camera, such as radial and/or tangential distortion parameters. By correcting the distortions caused by the optics the single image is obtained.

At 83, a projection point of the image sensor in the image is identified. The projection point may be determined as explained with reference to Equations (1) to (4) above. Coordinates of the projection point may be stored in a memory of the driver assist system for the respective single image sensor. The coordinates of the projection point may be retrieved for use identifying image features in the image which extend along lines passing through the projection point.

At 84, a two-dimensional angle-transformed image is generated. Generating the angle-transformed image may include generating plural pixel columns of the angle-transformed image. Each one of the plural pixel columns may be generated based on pixel values of pixels located along a line in the image which passes through the projection point. The angle-transformed image may be generated as explained with reference to Figs. 2 to 5 above.

At 85, an edge detector is applied to the angle-transformed image. The edge detector may be configured to detect features extending along the column direction in the angle-transformed image. Various edge detectors may be used. The edge detector may in particular be implemented as described with reference to Figs. 8 to 13 below.

At 86, it is verified whether a feature has been detected which has a length perpendicular to the angle coordinate axis which exceeds, or is at least equal to, a threshold. The threshold may have a predetermined value corresponding to at least two pixels. Greater thresholds may be used. If no such feature is detected in the angle-transformed image, the method may return to 81.

If features are identified in the angle-transformed image which extend by a certain length along the direction perpendicular to the angle coordinate axis, this information may be used by a driver assist function at 87. The driver assist function may perform any one or any combination of various functions, such as warning a driver when the vehicle approaches an obstacle, controlling a graphical user interface to provide information on obstacles, transmitting control commands to control the operation of vehicle components, or similar. The method may then again return to 81.

The processing may be repeated for another image frame captured by the single image sensor. Even when the processing is repeated, it is not required to combine information from more than one image to identify lines which, in a world coordinate system, extend normal to a road surface. As only a single image needs to be evaluated to identify an obstacle, the processing may be performed rapidly. The processing may be repeated for each image frame of a video sequence.

The identification of features in the angle-transformed image may be performed using various edge detectors. The processing in which the image is mapped onto an angle-transformed two-dimensional image facilitates processing, as the direction of features which are of potential interest is known a priori. Implementations of an edge detector which allows features extending normal to the angle coordinate axis to be detected efficiently will be explained with reference to Figs. 8 to 13.

Generally, the edge detector may be operative to detect Haar-like features. The detection of Haar-like features may be performed with directional selectivity, because features extending perpendicular to the angle coordinate axis in the angle-transformed image are to be identified. Additional processing steps may be used, such as suppression of pixels at which a gradient response is not a local maximum and/or tracing performed in a direction transverse to the angle coordinate axis.

Fig. 8 is a flow chart of a procedure 90. The procedure 90 may be used to implement the edge detection in the angle-transformed image. The procedure 90 may be performed by the processing device 10. The procedure 90 may be performed in step 73 of the method 70 or in step 85 of the method 80. Additional reference will be made to Figs. 9 to 13 for further illustration of the procedure 90.

Generally, the procedure 90 may include the determination of a gradient response at 91 and 92, the suppression of pixels for which the gradient response does not correspond to a local maximum at 93, and the tracing of edges at 94.

At 91 and 92, gradient responses are determined at plural pixels of the angle-transformed image. The gradient response may respectively be determined using detectors for Haar-like features. A detector may be used which is responsive to features extending along a direction normal to the angle coordinate axis in the angle-transformed image. The detector may therefore be such that it detects a change, or gradient, in pixel value along the angle coordinate axis.

Fig. 9 illustrates the detection of Haar-like features based on gradient response. To determine the gradient response at a pixel 103, pixel values of all pixels in a first sub-rectangle 101 may be summed. The pixel values for each pixel of the angle-transformed image may be included in the range from 0 to 255, for example. The first sub-rectangle 101 has a width w indicated at 105 and a height h indicated at 104. The sum of pixel values of all pixels in the first sub-rectangle 101 may be denoted by $S_{ABCD}$. Pixel values of all pixels in a second sub-rectangle 102 may be summed. The second sub-rectangle 102 also has the width w and the height h. The sum of pixel values of all pixels in the second sub-rectangle 102 may be denoted by $S_{CDEF}$. The rectangle defined by the union of the first sub-rectangle 101 and the second sub-rectangle 102 may be located such that the pixel 103 is at a pre-defined position relative to the rectangle, e.g. close to the center of the rectangle. The second sub-rectangle 102 is adjacent the first sub-rectangle 101 in a direction along the angle coordinate axis.

The gradient response rg for a given detector for Haar-like features, i.e. for a given width w and height h of the sub-rectangles, may be defined as:

$$rg = \frac{\left| S_{ABCD} - S_{CDEF} \right|}{A} \quad , \qquad (5)$$

where A = w·h denotes the area of a sub-rectangle. The height and width of the sub-rectangles may be measured in pixels of the angle-transformed image. For w = 1 and h = 1, the gradient response corresponds to the Roberts operator. With a normalization as defined in Equation (5), the gradient response may be included in the same range as the pixel values, e.g. in the range from 0 to 255.

To allow the gradient response to be computed efficiently, a summed area table may be used. For illustration, in the procedure 90, a summed area table may be computed at 91. At 92, gradient responses are computed using the summed are table. The summed area table may be a two-dimensional array. For each pixel of the angle-transformed image having pixel coordinates x and y in the angle-transformed image, the corresponding value in the summed area table may be given by

$$sum(x, y) = \sum_{\substack{x' \le x \\ y' \le y}} i(x', y') , \qquad (6)$$

where i(x', y') denotes a pixel value in the angle-transformed image at pixel coordinates x', y'. The value of the summed area table at pixel coordinates (x, y) may be understood to be the sum of pixel values in a rectangle from the upper left corner of the angle-transformed image (supplemented with zero pixel values in the regions shown at the upper left and upper right in Fig. 5) to the respective pixel. The summed area table may be computed recursively from smaller values of x and y to larger values of x and y, allowing the summed area table to be computed efficiently. Using the summed area table, sums over pixel values of arbitrary rectangles may be computed efficiently, performing only three addition or subtraction operations. By keeping computational costs moderate, the object recognition may be performed quickly, allowing objects to be recognized in real time or close to real time.

Fig. 10 illustrates the computation of a sum of pixel values for a rectangle 110 using the summed area table. The rectangle 110 has a corner K shown at 111 with coordinates $x_K$ and $y_K$, a corner L shown at 112 with coordinates $x_L$ and $y_L$, a corner M shown at 113 with coordinates $x_M$ and $y_M$, and a corner N shown at 114 with coordinates $x_N$ and $y_N$. The sum $S_{rect}$ over pixel values in the rectangle 110 may be determined according to

$$S_{rect} = sum(x_K, y_K) + sum(x_N, y_N) - sum(x_L, y_L) - sum(x_M, y_M). \quad (7)$$

Two such computations may be performed for the sub-rectangles shown in Fig. 9 to determine the gradient response according to Equation (5).

To further increase robustness, not only one gradient response but plural different gradient responses may be determined for each one of plural pixels. For illustration, for each one of plural pixels, Equation (5) may be evaluated using sub-rectangles as shown in Fig. 9 with different sizes, i.e. different heights and widths, and of different scales. The effective gradient response Rg which will be used in the subsequent processing may be defined as

$$Rg = \max_i (rg_i),\qquad\qquad\qquad(8)$$

where i is a label for the different detectors for Haar-like features that are used. For illustration, n different shapes and/ or s different scaling factors may be used, and the index i then runs from i=1 to i=n·s.

Other techniques to determine the gradient response may be used. For illustration, it is not required that plural different Haar-like feature detectors be used.

Returning to the procedure 90 of Fig. 9, after the gradient response has been determined in a spatially resolved manner, at 93 a suppression may be performed to reduce the influence of pixels at which the gradient response is not a local maximum along the angle coordinate axis. Thereby, account is taken of the fact that the gradient response when determined as explained with reference to Equations (5) to (8) above may be gradually changing along the angle coordinate axis. The suppression may be implemented such that, for plural pixels, the gradient response at the respective pixel is respectively compared to the gradient response to a first adjacent pixel and a second adjacent pixel, which are adjacent to the pixel along the angle coordinate axis. The gradient response at the pixel may be set to a default value, such as zero, unless the gradient response at the pixel is greater than both the gradient response at the first adjacent pixel and the second adjacent pixel.

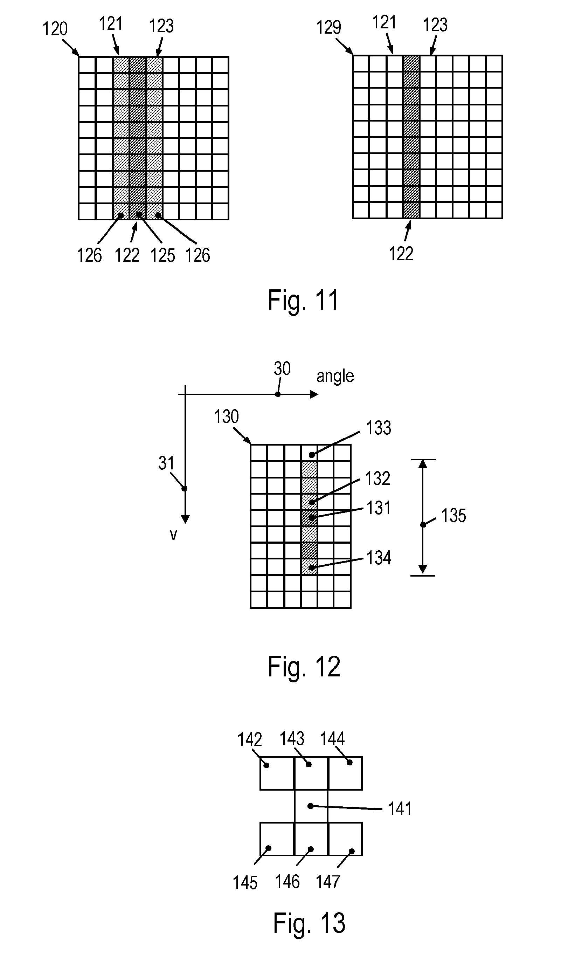

Fig. 11 illustrates in grey scale the gradient response in a section 120 of the angle-transformed image. For a feature extending along the column direction, the gradient response has a local maximum in column 122. The gradient response may still be finite in adjacent columns 121 and 123. In the suppression of non-maximum gradient responses, the gradient response at pixel 125 is compared to the gradient response at the first adjacent pixel 126 and the second adjacent pixel 127. As the gradient response at pixel 125 is larger than the gradient response at the first adjacent pixel 126 and the gradient response at the second adjacent pixel 127, the gradient response at pixel 125 is not set to the default value. When the gradient response at pixel 126 is compared to the gradient response at the two pixels adjacent to pixel 126 along the angle coordinate axis, it is found that the gradient response at pixel 126 is less than the gradient response at pixel 125. Therefore, the gradient response at pixel 126 is set to a default value, e.g. to zero.

By performing such a suppression, the gradient response is suppressed at pixels where the gradient response does not correspond to a local maximum. The spatially varying gradient response obtained after suppression is illustrated at 129. The suppression has the effect that the gradient response for the pixels in columns 121 and 123 is set to the default value, e.g. zero, because the gradient response in these columns is not a local maximum as a function of angle coordinate.

Other techniques may be used to suppress artefacts in the gradient response. For illustration, a non-linear function may be applied to the gradient response determined in steps 91 and 92 of the procedure 90 to amplify the signal for pixels where the gradient response is large, and to suppress the gradient response otherwise. In yet other implementations, the suppression at 93 may be omitted.

In the procedure 90, tracing may be performed at 94 to detect linear features extending transverse to the angle coordinate axis. The tracing may be implemented as Canny tracing. In other implementations, use may be made of the fact that features of potential interest extend generally transverse to the angle coordinate axis 30. The tracing may be performed with directional selectivity.

The tracing at 94 may include performing a threshold comparison in which the gradient response, possibly after suppression of non-maximum gradient responses, is compared to a first threshold. Each pixel identified based on this comparison to the first threshold is identified as a potential point of a feature which extends along a column. The gradient response at adjacent pixels that are offset from the identified pixel in a direction perpendicular to the angle coordinate axis is then compared to a second threshold. The second threshold is smaller than the first threshold. If the gradient response at one or several of the adjacent pixels is greater than the second threshold, this adjacent pixel is identified as belonging to an edge extending normal to the angle coordinate axis in the angle-transformed image, corresponding to a line in the world coordinate space which is oriented orthogonal to the road surface. The threshold comparison to the second threshold is repeated for adjacent pixels of a pixel which has been identified as belonging to the feature which extends normal to the angle coordinate axis in the angle-transformed image. If the gradient response at a pixel adjacent to a pixel that has previously been identified as belonging to a feature extending normal to the angle coordinate axis is less than, or at maximum equal to, the second threshold, this pixel is identified as not belonging to the feature which extends normal to the angle coordinate axis in the angle-transformed image.

The tracing may be performed with directional selectivity. For illustration, it may not be required to perform a threshold comparison for the gradient response at pixels that are adjacent to a pixel along the angle coordinate axis in the tracing. Features of potential interest are features extending transverse to the angle coordinate axis in the angle-transformed image, which corresponds to lines extending normal to a road surface in the world coordinate system.

Fig. 12 illustrates the tracing. Fig. 12 shows in grey scale the gradient response in a section 120 of the angle-transformed image. At pixels 131, the gradient response is greater than a first threshold. By comparing the gradient response at adjacent pixel 132 adjacent to the pixel 131 to the second threshold which is less than the first threshold, the adjacent pixel 132 is identified as belonging to the same vertical edge, even if the gradient response at the adjacent pixel 132 is less than the first threshold. The tracing with directional selectivity is continued until pixel 133 is found to have a gradient response less than the second threshold. The pixel 133 is thus identified as not belonging to the vertical edge. The tracing is performed in either direction from the pixel 131. I.e., for pixels in the rows offset from the pixel 132 in either direction, a threshold comparison to the second threshold is performed. For illustration, pixels in between pixel 131 and pixel 134 are identified as having gradient responses greater than the second threshold. These pixels are identified as belonging to the vertical edge.

Fig. 13 further illustrates one implementation of the tracing. If a pixel 141 having coordinates (x, y) in the angle-transformed image is identified to belong to the vertical edge, the gradient response at the six adjacent pixels 142-147 which are offset from the pixel 141 in a direction normal to the angle coordinate axis may be compared to the second threshold. These pixels have coordinates (x-1, y-1), (x, y-1), (x+1, y-1), (x-1, y+1), (x, y+1), and (x+1, y+1). All adjacent pixels 142-147 having a gradient response greater than the second threshold may be identified as belonging to the vertical edge.

During the tracing, the length of the feature that corresponds to a vertical edge may be determined. For illustration, in Fig. 12, the identified feature has a length 135. A threshold comparison may be performed to reject all identified features which have a length that is less than, or at most equal to, a length threshold. This allows spurious noise to be discarded.

The tracing may also be implemented in other ways. For illustration, conventional Canny tracing may be used.

Implementations of an edge detector as described with reference to Figs. 8 to 13 allow vertical edges to be detected efficiently. The summed area table allows gradient responses to be determined with little computational complexity. The edge detector also provides multi-scale characteristics and robustness against noise, when the size of the sub-rectangles used for detecting Haar-like features is varied. Pronounced edge characteristics may be attained by suppression of the gradient response at pixels where the gradient response does not have a local maximum along the angle coordinate direction, and by using tracing with directional selectivity.

The image processing performed according to embodiments allows obstacles to be recognized with moderate computational costs. This allows the object recognition to be performed at a time scale which is equal to or less than the inverse rate at which image frames are captured. Object recognition may be performed in real time or close to real time. By keeping the computational costs for object recognition moderate, the obstacle recognition may be readily combined with additional processing steps. For illustration, the obstacle recognition may be integrated with tracking. This allows the performance to be increased further. The efficient detection of obstacles in embodiments allows the obstacle detection to be implemented at the low or middle level hardware platform.

Using the edge detector, features which extend transverse to the angle coordinate axis in the angle-transformed image may be identified. The processing device may assign the corresponding lines in the world coordinate system to be edges of an obstacle. The result of the image processing may be used by the driver assist system. For illustration, parking assistance functions may be performed based on the obstacle detection. The coordinates of the features identified in the angle-transformed image may be converted back to world coordinates by the processing device for use in warning or control operations. Warning operations may include the generation of audible and/or visible output signals. For illustration, color coding may be used to warn a driver of obstacles which extend normal to the surface of the road.

While methods and systems according to embodiments have been described in detail, modifications may be implemented in other embodiments. For illustration, while implementations of edge detectors have been described, other implementations of edge detectors may be applied to the angle-transformed image in other embodiments.

For further illustration, while exemplary fields of application such as parking assistance functions have been described, methods and systems of embodiments may also be used for collision warning, collision prediction, activation of airbags or other safety devices when a collision is predicted to occur, distance monitoring, or similar.

## Claims

1. A method of detecting an obstacle (2, 3) in a single image (21; 41) captured using a single image sensor (11, 12) of a driver assist system (9), the method comprising:

   retrieving the single image (21; 41) captured using the single image sensor (11, 12);
   identifying at least one line extending along a direction normal to a road surface, the at least one line being identified based on the single image (21; 41); and
   detecting the obstacle (2, 3) based on the identified at least one line;

wherein identifying the at least one line comprises:

establishing at least one image feature (24-26; 61-64) in the single image (21; 41) which extends along a line (27-29; 43-47) passing through a projection point (23) of the image sensor (11, 12).

2.  The method of claim 1,
    wherein establishing the at least one image feature (24-26; 61-64) comprises:

    - determining the projection point (23) based on parameters of the single image sensor (11, 12);
    - generating a two-dimensional angle-transformed image (22; 42) based on the single image (21; 41) and the determined projection point (23), wherein an angle coordinate axis (30) of the angle-transformed image (22; 42) represents angles (48, 49) of lines in the single image (21; 41) passing through the projection point (23); and
    - applying an edge detector to the angle-transformed image (22; 42) to identify at least one feature (34-36; 65-68) which extends along a direction (31) transverse to the angle coordinate axis (30) in the angle-transformed image (22; 42).

3.  The method of claim 2,
    wherein applying the edge detector comprises performing a length threshold comparison for a length (135) over which the at least one feature (34-36; 65-68) extends along the direction (31).

4.  The method of claim 2 or claim 3,
    wherein applying the edge detector comprises determining a spatially resolved gradient response in the angle-transformed image (22; 42).

5.  The method of claim 4,
    wherein applying the edge detector comprises determining whether a gradient response at a pixel (125) in the angle-transformed image (22; 42) is greater than both a gradient response at a first adjacent pixel (126) and a gradient response at a second adjacent pixel (127), wherein the first and second pixels (126, 127) are adjacent to the pixel (125) along the angle coordinate axis (30).

6.  The method of claim 5,
    wherein applying the edge detector comprises selectively setting the gradient response at the pixel (125) to a default value based on whether the gradient response at the pixel (125) in the angle-transformed image (22; 42) is greater than both the gradient response at the first adjacent pixel (126) and the gradient response at the second adjacent pixel (127).

7.  The method of any one of claims 4 to 6,
    wherein applying the edge detector comprises tracing the gradient response, the tracing being performed with directional selectivity.

8.  The method of claim 7,
    wherein the tracing comprises:

    - comparing the gradient response to a first threshold to identify a pixel (131; 141) in the angle-transformed image (22; 42);
    - comparing the gradient response at another pixel (132; 142-147) which is adjacent to the pixel (131; 141) in the angle-transformed image (22; 42) to a second threshold, the second threshold being different from the first threshold.

9.  The method of claim 8,
    wherein the gradient response at plural other pixels (142-147) is respectively compared to the second threshold, the plural other pixels (142-147) being offset from the identified pixel in a direction (31) perpendicular to the angle coordinate axis (30).

10. The method of claim 8 or claim 9,
    wherein the pixel (131) is identified based on whether the gradient response at the pixel (131) exceeds the first threshold, and wherein the second threshold is less than the first threshold.

**11.** The method of any one of claims 2 to 10,
wherein non-linear distortions of raw image data (20; 40) are corrected to generate the single image (21; 41), before
the angle-transformed image (22; 42) is generated.

**12.** The method of any one of the preceding claims, further comprising
processing the identified at least one line by the driver assist system (9) to generate a control signal.

**13.** A driver assist system, comprising:

at least one image sensor (11, 12); and
a processing device (10) coupled to the at least one image sensor, the processing device (10) being configured
to identify at least one line extending along a direction normal to a road surface based on a single image (21;
41) captured by a single image sensor (11, 12) of the at least one image sensor (11, 12), and
to detect an obstacle (2, 3) based on the identified at least one line;
wherein the processing device (10) is configured
to establish at least one image feature (24-26; 61-64) in the single image (21; 41) which extends along a line
(27-29; 43-47) passing through a projection point (23) of the image sensor, in order to identify the at least one
line extending along the direction normal to the road surface.

**14.** The driver assist system of claim 13, further comprising:

an output interface (13) coupled to the processing device (10),
the processing device (10) being configured to control the output interface (13) to selectively output a warning
signal based on the detected obstacle (2, 3) during a parking process.

**15.** The driver assist system of claim 13 or claim 14,
configured to perform the method of any one of claims 1 to 12.

Fig. 1

Fig. 2

Fig. 3

Fig. 4

30    angle

31

v

69

42    66    68

65    67

57    56    55    54    53

Fig. 5

70

| Retrieve single image | — 71 |

| Generate two-dimensional angle-transformed image | — 72 |

| Identify at least one feature which extends along a direction transverse to the angle coordinate axis | — 73 |

Fig. 6

80

```
      ┌──────────────────────────────────┐
──────►│    Capture raw image data        │──── 81
│      └──────────────────────────────────┘
│                       │
│                       ▼
│      ┌──────────────────────────────────┐
│      │  Correct distortion to generate  │
│      │   single image for further       │──── 82
│      │        processing                │
│      └──────────────────────────────────┘
│                       │
│                       ▼
│      ┌──────────────────────────────────┐
│      │     Identify projection point    │──── 83
│      └──────────────────────────────────┘
│                       │
│                       ▼
│      ┌──────────────────────────────────┐
│      │  Generate two-dimensional angle- │
│      │       transformed image          │──── 84
│      └──────────────────────────────────┘
│                       │
│                       ▼
│      ┌──────────────────────────────────┐
│      │ Apply edge detector to identify  │
│      │  features orthogonal to angle    │──── 85
│      │ coordinate axis in angle-        │
│      │       transformed image          │
│      └──────────────────────────────────┘
│                       │
│                       ▼
│              ╱────────────────╲
│    NO       ╱  Feature(s) having ╲
│◄───────────    a length exceeding  ──── 86
│             ╲   a threshold?     ╱
│              ╲────────────────╱
│                       │
│                     YES
│                       ▼
│      ┌──────────────────────────────────┐
└──────│    Control driver assist function│──── 87
       └──────────────────────────────────┘
```

Fig. 7

90

| Compute summed area table for angle-transformed image | — 91 |

↓

| Determine gradient response from summed area table | — 92 |

↓

| Perform suppression to reduce false response | — 93 |

↓

| Trace edge | — 94 |

Fig. 8

Fig. 9

Fig. 10

Fig. 11

Fig. 12

Fig. 13

# EP 2 610 778 A1

## EUROPEAN SEARCH REPORT

Application Number

EP 11 19 5832

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Teruko Yata ET AL: "Static Environment Recognition Using Omni-camera from a Moving Vehicle", Technical report CMU-RI-TR-02-12, 1 January 2002 (2002-01-01), pages 1-7, XP55026174, Pittsburgh, PA Retrieved from the Internet: URL:http://www.ri.cmu.edu/pub_files/pub3/yata_teruko_2002_1/yata_teruko_2002_1.pdf [retrieved on 2012-05-04] * section 1, paragraph 2, last sentence * * section 2.2 * * section 3, last paragraph * * sections 3.1-3.2 * * section 4, paragraphs 1-4;figures 2-7 * * section 5, item 4 * ----- | 1-15 | INV. G06K9/00 G06T5/00 |
| X | EP 2 233 358 A1 (AISIN SEIKI [JP]) 29 September 2010 (2010-09-29) * abstract * * paragraphs [0036], [0050] - paragraphs [0062], [0072]; figures 7,11-14 * ----- | 1,12-15 | |
| T | Stiller Christoph, Bachmann Alexander, Duchow Christian: "Maschinelles Sehen" In: Winner Hermann; Hakuli Stephan; Wolf Gabriele (Eds.): "Handbuch Fahrerassistenzsysteme - Grundlagen, Komponenten und Systeme für aktive Sicherheit und Komfort", 2009, Vieweg+Teubner GWV Fachverlage GmBH, WIesbaden, XP002675382, ISBN: 978-3-8348-0287-3 * pages 198 - 208, 216-222 * ----- -/-- | | TECHNICAL FIELDS SEARCHED (IPC) G06K G06T G08G B60R |

The present search report has been drawn up for all claims

| Place of search | Date of completion of the search | Examiner |
|---|---|---|
| The Hague | 7 May 2012 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 19 5832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | ZHANG YANKUN ET AL: "A single camera based rear obstacle detection system", INTELLIGENT VEHICLES SYMPOSIUM (IV), 2011 IEEE, IEEE, 5 June 2011 (2011-06-05), pages 485-490, XP031999009, DOI: 10.1109/IVS.2011.5940499 ISBN: 978-1-4577-0890-9 * section 4 * | | |

-----

TECHNICAL FIELDS
SEARCHED      (IPC)

The present search report has been drawn up for all claims

| Place of search | Date of completion of the search | Examiner |
|---|---|---|
| The Hague | 7 May 2012 | Kollreider, Klaus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 2 610 778 A1**

## ANNEX TO THE EUROPEAN SEARCH REPORT
## ON EUROPEAN PATENT APPLICATION NO.

EP 11 19 5832

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2012

| Patent document cited in search report | | Publication date | Patent family member(s) | | Publication date |
|---|---|---|---|---|---|
| EP 2233358 | A1 | 29-09-2010 | EP 2233358 A1 | | 29-09-2010 |
| | | | JP 2010226449 A | | 07-10-2010 |
| | | | US 2010245578 A1 | | 30-09-2010 |

EPO FORM P0459

For more details about this annex : see Official Journal of the European Patent Office, No. 12/82

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MASSIMO BERTOZZI ; ALBERTO BROGGI.** GOLD: A Parallel Real-Time Stereo Vision System for Generic Obstacle and Lane Detection. *IEEE TRANSACTIONS ON IMAGE PROCESSING,* January 1998, vol. 7 (1), 62-81
- **MASSIMO BERTOZZI ; ALBERTO BROGGI ; ALESSANDRA FASCIOLI.** Stereo inverse perspective mapping: theory and applications. *Image and vision computing,* 1998, vol. 16, 585-590

- **CHANHUI YANG ; HITOSHI HONGO ; SHINICHI TANIMOTO.** A new approach for In-Vehicle Camera Obstacle Detection By Ground Movement Compensation. *IEEE Intelligent Transportation Systems,* 2008, 151-156